**Europäisches Patentamt**

(19) **European Patent Office**

**Office européen des brevets**

(11) Publication number: **0 243 291**
**A2**

(12) # EUROPEAN PATENT APPLICATION

(21) Application number: **87500018.4**

(22) Date of filing: **24.04.87**

(51) Int. Cl.³: **H 04 L 11/16**
**H 04 L 11/00**

(30) Priority: **25.04.86 ES 554361**

(43) Date of publication of application:
**28.10.87 Bulletin 87/44**

(84) Designated Contracting States:
**AT BE DE FR GB IT SE**

(71) Applicant: **Standard Electrica S.A.**
**Ramirez de Prado, 5**
**E-28045 Madrid(ES)**

(72) Inventor: **Kiatipov, Edmundo Valentin**
**c/Santa Virgilia no. 12**
**E-28033 Madrid(ES)**

(72) Inventor: **Hita de la Torre, Carlos**
**c/Antonio Folgueras no. 9**
**E-28018 Madrid(ES)**

(54) **Improvements in a new simultaneous voice and data communication system, with possibility of connection to public or private networks.**

(57) Two new units of the system, the Digital Interconnection Unit and the Local Area Network Gateway Unit are described.

The Digital Interconnection Unit allows the connection of a base ring to another base ring, or the connection of several base rings to another ring serving as an interconnecting ring, or the connection of a base ring or of an interconection ring to a digital link. It consists of the Base Nucleus (common for all units) and four additional modules: the multiple access electronic memory module (11); the modulation/demodulation module (12); the information control and processing module (13); and the coding, interface and adaptation module (14).

The Local Area Network Gateway Unit allows the connection of a local area network (LAN) to a base ring. It consist of the Base Nucleus (common for all units) and four additional modules: the highway bus coupling module (31); the buffer module (32); the Local Area Network Gateway Unit control module (33); and the local area network coupling module (34).

Fig. 1

Croydon Printing Company Ltd.

./...

Fig. 2

Fig.3

Improvements in "A new simultaneous
voice and data communication system,
with possibility of connection to
public or private networks".

In the European patent No. 85 112 185.5, registered on September 25, 1985, a new simultaneous voice and data communications system, with possibility of connection to public or private networks has been described.

In said patent, a description was made of the system which consists of the following elements: a closed ring, the tap points connecting the different units to the ring, and the system units themselves ( stations, line units, and/or interfaces ). It also showed how the ring consisted of a physical support for the serial transmission of the information, and optionally, of an additional pair of wires for the power feeding of the different system units connected to the ring, provided only when neither remote power feeding nor individual power feeding is used.

Likewise it showed how the tap points may be installed anywhere along the ring, and how these tap points are viewed as a telephone type connector by said system units. It further showed that when a tap point does not have a unit connected to it, it allows the through propagation of the information present on the ring, with no modification being exerced on said information. However, when a unit is connected to the tap point, such unit receives information from the ring incoming section to the tap point and transmits information to the outgoing section on the transmission physical support. The tap point restores the continuity of the ring in case of a disconnection of the unit, which could occur because of a malfunction, a failure or the proper physical disconnection of the unit.

One of the basic characteristics of the new simultaneous voice and data communication system described in said patent, is that all the units ( stations, line units and / or interfaces) that are connected to the ring, are all composed of a common part, called the Basic Nucleus, which is complemented by additional parts specific to each type of unit.

After describing the modules which compose the Basic Nucleus ( common for all units ) as well as the functions performed by each of them, the Analog Line Unit ( one of the system units ) was described. This unit is formed by the Basic Nucleus and several specific modules each performing a well defined and described set of functions.

The description of the Telephone Station ( another system unit ) followed next. The Telephone Station is composed of the Basic Nucleus, and several specific modules each performing a well defined and described set of functions.

Last, a description of the Data Access Unit ( another system unit ) was given. This unit is composed of the Basic Nucleus and one specific module, the functions of this module being also described. Information was also provided about how the described specific module, part of the Data Access Unit, could be directly connected to a specific module of a Telephone Station and how it could use the Basic Nucleus of the Telephone Station.

The object of the present patent, is the description of two new system units: the Digital Interconnection Unit, and the Local Area Network Gateway Unit.

In order to facilitate the description of the two new units, Figure 1 shows the block diagram of the Digital Interconnection Unit, Figure 2 shows how three Digital Interconnection Units and two Local Area Network Gateway Units can be connected and operated together, and Figure 3 shows the block diagram of the Local Area Network Gateway Unit. The list that follows gives the correlation between the chosen abbreviated designations and their corresponding meaning:

A = Transmission physical support of ring A.

B = Transmission physical support of ring B.

C = Transmission physical support of ring C.

D = Transmission physical support of ring D.

E = Transmission physical support of interconnection ring E.

EC = Tap point.

ED = Digital link.

NB = Basic Nucleus, described in the main patent.

RAL = Local area network.

TD/PC, TD´/PC´ = Data terminal/Personal computer.

UPR = Local Area Network Gateway Unit.

11 = Multiple access electronic memory module.

12 = Modulation / demodulation module.

13 = Information control and processing module. 0243291

14 = Coding, interface and adaptation module, as relates to transmission physical support of ring B.

21 = Ring C User Stations.

21´= Ring D User Stations.

22 = Analog Telephone Line Unit.

23 = Public or private switched analog telephone network

24 = Digital Interconnection Unit between ring C and the interconnection ring E.

24´= Digital Interconnection Unit between ring D and the interconnection ring E.

24´´= Digital Interconnection Unit between ring D and a digital link ED.

25 = Data module connected to the Basic Nucleus of a ring C User Station.

25´= Data module connected to the Basic Nucleus of a ring D User Station.

26 = Data Access Unit connected to ring C.

27 = Central Computer Unit.

28 = Access element to the physical support (29) of the local area network RAL1.

28´= Access element to the physical support (29´) of the local area network RAL2.

29 = Transmission physical support of the local area network RAL1.

29´= Transmission physical support of the local area network RAL2.

31 = Highway bus coupling module ( high speed bus ).

32 = Buffer module for the information carried through the Local Area Network Gateway Unit ( UPR ).

33 = Local Area Network Gateway Unit control module.

34 = Local area network ( RAL ) coupling module.

35 = Personal computer connected to the local area network.

36 = Transmission physical support of the local area network RAL.

37 - Data terminal/Personal computer.

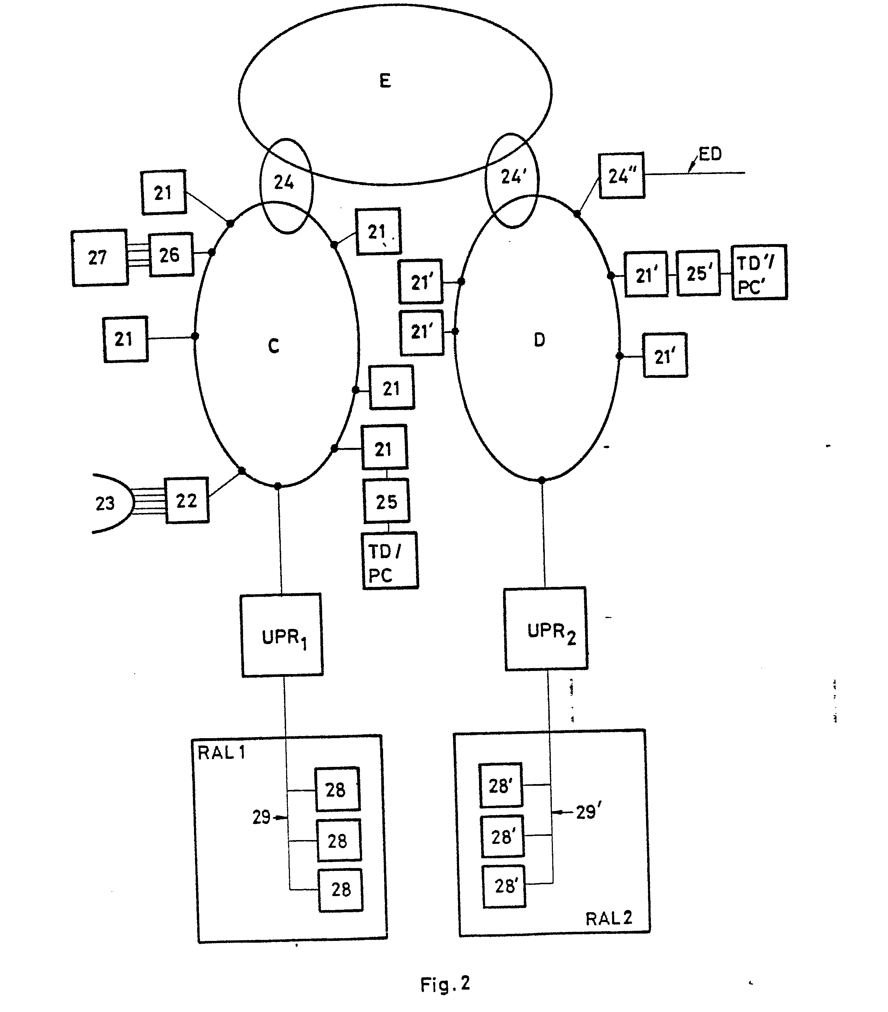

The Digital Interconnection Unit allows the connection of a base ring, equipped with all its elements, to another base ring, or the connection of several base rings to another ring serving as an interconnection ring, or also the connection of a base ring, or of an interconnection ring to a digital link (ED). Of said four possibilities, the second and third are shown in Figure 2.

The connection of a base ring to a digital link allows the access to the central offices of a public or a private digital telephone network or to private digital exchanges.

The generic function of the Digital Interconnection Unit is the adaptation, to each network, of the information crossing the boundary between them. The adaptation applies to transmission speeds, transmission encodings, types of modulation, sychronization and operational protocols.

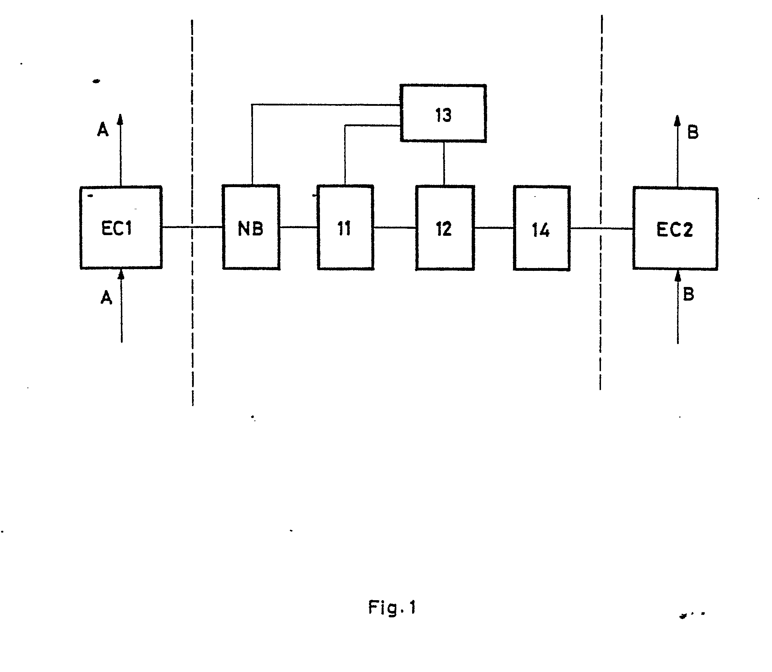

As it may be seen from Figure 1, the Digital Interconnection Unit consists of a Basic Nucleus (NB), which is common to all units of the system, and of four additional modules: a multiple access electronic memory module (11); a modulation / demodulation module (12); an information control and processing module (13); and a coding, interface and adaptation module (14).

The Basic Nucleus (NB), which is common to all units of the system, supports the functions described in said European patent, and is connected to one of the transmission physical supports ( ring A in Figure 1 ), through the corresponding tap point (EC1), whose functions are also described in said European patent.

The multiple access electronic memory module (11) supports the following functions:

- It adjusts the delays that appear when the original information is transfered between the two systems.

- It synchronizes the flow of original information to either system in the case of a transfer between said systems.

- It processes the original information coming from either system to adapt it to the specific protocol requirements of each side.

The modulation / demodulation module (12) supports the following functions:

- It modulates / demodulates the original information to adapt it to the transmission requirements, and possible switching requirements of the transmission physical support associated with the specific connection.

The information control and processing module (13) supports the following functions:

- It adapts the different signalling types of the connected systems.

- It adapts the digital information coding when it crosses boundaries.

- It adapts the transfered information to the protocol requirements of each connected system.

The coding, interface and adaptation module (14) supports the following functions:

- It adapts the logic levels, the impedance levels and the transmission coding to the requirements of the transmission physical support of each system.

The following operational description clarifies the functions of the different modules:

The information flowing through the transmission support of the system A goes through the tap point EC1 and reaches the Basic Nucleus (NB), where it is decoded and demodulated, and delivered, in the original system A digital code, to the multiple access electronic memory module (11) for safe keeping. The information control and processing module (13), takes from memory module (11) the digital information in system A code, transforms it to system B code, and returns it to memory module (11). It is then sent to the modulation / demodulation module (12) which modulates it and delivers it to the coding, interface, and adaptation module (14) in order to be coded and transmitted over the transmission support of system B ( digital link or ring ) via the corresponding tap point (EC2).

Likewise the coded and modulated information travelling on the system B transmission physical support ( digital link or ring ) is addressed, through the tap point (EC2), to the coding, interface and adaptation module (14), where it is decoded. The decoded information is sent to the modulation / demodulation module (12), and once demodulated it is stored, in the original system B digital code, in the multiple access electronic memory module (11).

The information control and processing module (13) retrieves from the memory module (11) the information in the system B code, transforms it to the system A code and returns it to the memory module (11). This information is passed to the Basic Nucleus (NB) where it is modulated and coded, and then it is forwarded over the system A transmission physical support ( ring of the system A ), through the corresponding tap point (EC1).

All these transcoding operations, that are accomplished by the information control and processing module (13) are in accordance with the system A and the system B protocols.

The initialization, the signalling adaptation between systems A and B , and the transfer of frame alignment or signalling information are performed by the information control and processing module (13) and the coding , interface and adaptation module (14) through a constant dialog between them.

Figure 2 summarizes a theoretic and generic scenario by showing the interconnection of several system units, such as described in the main patent, with three Digital Interconnection Units ( just described herein ) and two Local Area Network Gateway Units ( to be described further on ).

Figure 2 shows two ring systems, C and D, connected to an interconnection ring E by means of two Digital Interconnection Units (24 and 24´).

On ring C, besides the Digital Interconnection Unit (24), are connected four User Stations (21), an Analog Telephone Line Unit (22) ( enabling the access to a public or private switched analog telephone network (23) ), a ˌdata terminal (TD) or personal computer (PC) connected to the ring via a data module (25) that is in turn connected to a User Station (21), a Central Computer Unit (27) connected to the ring via a Data Access Unit (26), and a Local Area Network Gateway Unit (UPR1) which enables the connection of a local ¯area network (RAL1)‚ itself consisting of a transmission physical support (29) and a series of associated access elements (28) on said physical support (29) of the local area network.

On ring D, besides the Digital Interconnection Unit (24´) with the interconnection ring E, there are a second Digital Interconnection Unit (24´´) which connects the digital link (ED) to ring D, three User Stations (21´), a data terminal (TD´) or personal computer (PC´), connected to the ring via a data module (25´) that is in turn connected to a User Station (21´), and a Local Area Network Gateway Unit (UPR2) connecting a local area network (RAL2), itself consisting of a transmission physical support and a series of associated access elements (28´) on said physical support (29´) of the local area network.

Although it has not been explicitly drawn, every unit on rings C and D is linked to its ring via the corresponding tap point (EC).

In the shown configuration, and just as an example, the following simultaneous communications can be established:

a) <u>Data communication between local area networks connected to different rings.</u>

This communication is accomplished via the access element (28) of RAL1 - the transmission physical support (29) of the local area network RAL1 - the Local Area Network Gateway Unit (UPR1) - the ring C - the Digital Interconnection Unit (24) - the interconnection ring E - the Digital Interconnection Unit (24ʹ) - the ring D - the Local Area Network Gateway Unit (UPR2) - the transmission physical support (29ʹ) of the local area network RAL2 - the access element (28ʹ) of RAL2.

b) <u>Voice communication between a User Station and a digital link connected to the same ring.</u>

For example: the User Station (21ʹ) - the ring D - the Digital Interconnection Unit (24ʹʹ) - the digital link (ED).

c) <u>Voice communication between a User Station and a digital link connected to a different ring.</u>

For example: the User Station (21) - the ring C - the Digital Interconnection Unit (24) - the interconnection ring E - the Digital Interconnection Unit (24ʹʹ) - the digital link (ED).

d) <u>Data communication between a data terminal or personal computer and a Central Computer Unit connected to another ring.</u>

- 11 -

0243291

For example: the data terminal (TD˘) or personal computer (PC˘) - the data module (25˘) - the User Station (21˘) - the ring D - the Digital Interconnection Unit (24˘) - the interconnection ring E - the Digital Interconnection Unit (24) - the ring C - the Data Access Unit (26) - the Central Computer Unit (27).

e) <u>Data communication between a data terminal or personal computer and a Central Computer Unit connected to the same ring.</u>

For example: the data terminal (TD) or personal computer (PC) - the data module (25) - the User Station (21) - the ring C - the Data Access Unit (26) -the Central Computer Unit (27).

f) <u>Long distance data communication from a data terminal or personal computer, through a digital link connected to a different ring.</u>

For example: the data terminal (TD) or personal computer (PC) - the data module (25)_ - the User Station (21) - the ring C - the Digital Interconnection Unit (24) - the interconnection ring E - the Digital Interconnection Unit (24˘) - the ring D - the Digital Interconnection Unit (24˘˘) - the digital link (ED).

As it could be concluded from this list of possible simultaneous communications, which by no means is intended to be exhaustive, the capacity for communications of this simultaneous voice and data communications system is substantially extended through the availability of the Digital Interconnection Unit, which is above described, and the Local Area Network Gateway Unit, which is described below.

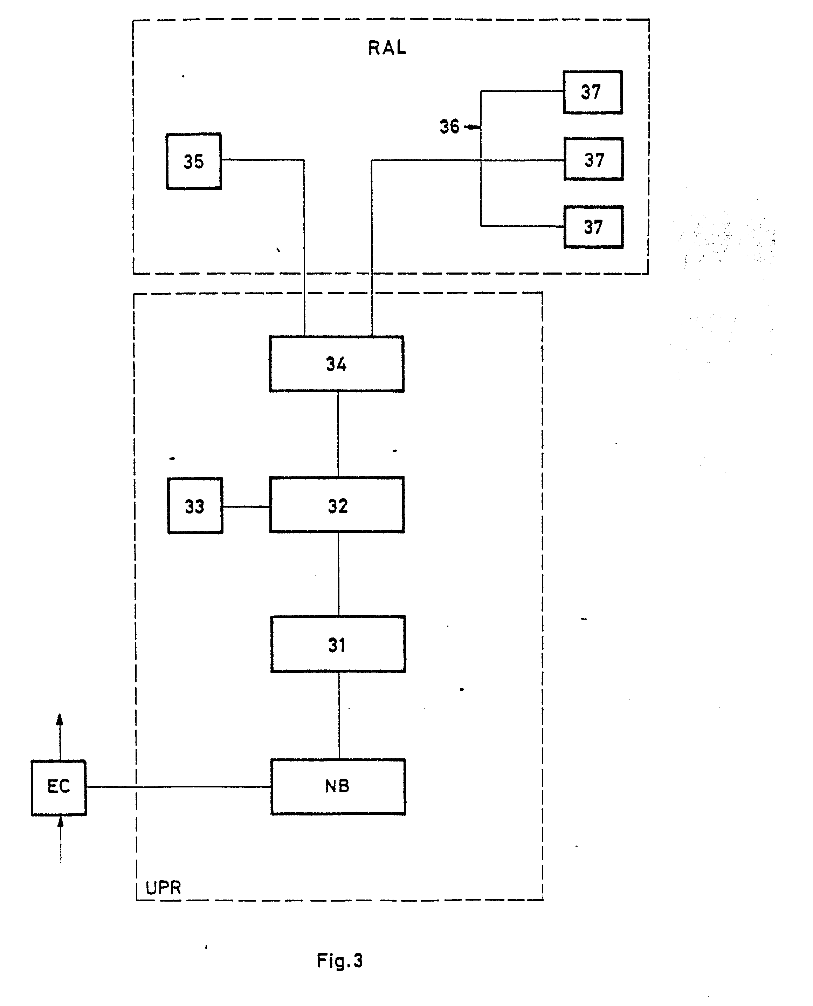

Figure 3 is a block diagram of the Local Area Network Gateway Unit, showing that it consists of a Basic Nucleus (NB), common to all units which make up the system, and of four additional modules: the highway bus coupling module (31), the buffer module (32), the Local Area Network Gateway Unit control module (33), and the local area network coupling module (34). In this figure it can also be seen the tap point (EC) that connects the unit to the corresponding ring, as well as a local area network (RAL) consisting of the transmission physical support (36) and several data terminals/personal computers (37) all connected to the transmission physical support (36), and a personal computer (35) that also forms part of the local area network, and connected to the local area network coupling module (34).

The Basic Nucleus (NB), which is common to all units of the system, supports the functions described in said European patent, and is connected to the transmission physical support of the system, via the corresponding tap point (EC), whose functions are also described in said European patent.

The highway bus coupling module (31) supports the following functions:

- It receives, adapts and sends all the information coming from the buffer module (32) to be inserted into the PCM frames which flow through the transmission physical support.

- It retrieves the complete information of the local area network bus ( group of n 30 channels seggregated from the complete set of channels ( time slots of the PCM frame ) and working as an independent unit ) from the PCM frames which flow through the transmission physical support and it stores such information in the buffer module (32) .

- It supports the functions of capturing and releasing the data port of the Gateway Unit (UPR) on the existing local area network bus in the PCM frames which flows through the transmission physical support, by using the adequate protocol.

The buffer module (32) supports the following functions:

- It stores, under indications of the Local Area Network Gateway Unit control module (33), the information coming from the highway bus coupling module (31), and from the local area network coupling module (34).

The Local Area Network Gateway Unit control module (33) supports the following functions:

- It controls the information stored by the highway bus coupling module (31) in the buffer module (32).
- It controls the information stored by the local area network coupling module (34) in the buffer module (32).
- It decides on the information to be transmitted by the local area network coupling module (34) onto the local area network RAL.
- It decides on the information to be transmitted by the highway bus coupling module (31) onto the ring via the Basic Nucleus (NB) and the corresponding tap point (EC).
- It supports the supervision functions of the Local Area Network Gateway Unit.

The local area network coupling module (34) supports the following functions:

- It receives all the information flowing through the transmission physical support (36) of the local area network RAL, and retransmits it to the personal computer (35) which forms part of the local area network RAL and, at the same time, it stores such information in the buffer module (32).

- It takes, from all the information stored in the buffer module (32), only that information it has been authorised to access by the Unit control module (33), and retransmits it to the personal computer (35) in one side, and in the other side to all data terminals or personal computers (37) once the transmission physical support(36) is seized .

Although the Local Area Network Gateway Unit has been described as an independent unit that is directly connected to the ring through the corresponding tap point (EC), it is easy to recognize that it can be connected to a User Station, and that in this case the Basic Nucleus (NB) would be that of the User Station.

CLAIMS

1.- Improvements in " New simultaneous voice and data communication system, with possibility of connection to public or private networks", according to claims 1 and 4 of the European patent No. 85 112 185.5, characterized in that each Digital Interconnection Unit, another system unit, consists of a Basic Nucleus and four additional modules: the multiple access electronic memory module (11), the modulation / demodulation module (12), the information control and processing module (13), and the coding, interface and adaptation module (14).

2.- Improvements in " New simultaneous voice and data communications system, with possibility of connection to public or private networks", according to claims 1 and 4 of the European patent No. 85 112 185.5, and claim 1 of the present patent, characterized in that the multiple access electronic memory module (11) supports the following functions:

- It adjusts the delays that appear when the original information is transfered between the two systems.

- It synchronizes the flow of original information to either system in the case of a transfer between said systems.

- It processes the original information coming from either system to adapt it to the specific protocol requirements of each side.

3.- Improvements in "New simultaneous voice and data communication system, with possibility of connection to public or private networks", according to claims 1 and 4 of the European patent No. 85 112 185.5, and claim 1 of the present patent, characterized in that the modulation/ demodulation module (12) supports the following functions:

- It modulates/demodulates the original information to adapt it to the transmission requirements, and possible switching requirements of the transmission physical support ⋅ associated with the specific connection.

4.- Improvements in "New simultaneous voice and data communication system, with possibility of connection to public or private networks", according to claims 1 and 4 of the European patent No. 85 112 185.5, and claim 1 of the present patent, characterized in that the information control and processing module (13), supports the following functions:

- It adapts the different signalling types of the connected systems.

- It adapts the digital information coding when it crosses boundaries.

- It adapts the transfered information to the protocol requirements of each connected system.

5.- Improvements in "New simultaneous voice and data communications system, with possibility of connection to public or private networks", according to claims 1 and 4 of the European patent No. 85 112 185.5, and claim 1 of the present patent, characterized in that the coding, interface and adaptation module (14), supports the following functions:

- It adapts the logic levels, the impedance levels and the transmission coding to the requirements of the transmission physical support of each system.

6.- Improvements in "New simultaneous voice and data communication system, with possibility of connection to public or private networks", according to claims 1 and 4 of the European patent No. 85 112 185.5, characterized in that each Local Area Network Gateway Unit, another system unit, consists of the Basic Nucleus and four additional modules: the highway bus coupling module (31), the buffer module (32), the Local Area Network Gateway control module (33), and the local area network coupling module (34).

7.- Improvements in "New simultaneous voice and data communication system, with possibility of connection to public or private networks", according to claims 1 and 4 of the European patent No. 85 112 185.5, and claim 6 of the present patent, characterized in that the highway bus coupling module (31), supports the following functions:

- It receives, adapts and sends all the information coming from the buffer module (32) to be inserted into the PCM frames which flow through the transmission physical support.

- It retrieves the complete information of the local area network bus from the PCM frames which flow through the transmission physical support and it stores such information in the buffer module (32).

- It captures and releases the data port of the Gateway Unit on the existing local area network bus in the PCM frames which flow through the transmission physical support, by using the adequate protocol.   0243291

8.- Improvements in "New simultaneous voice and data communications system, with possibility of connection to public or private networks", according to claims 1 and 4 of the European patent No. 85 112 185.5, and claim 6 of the present patent, characterized in that the buffer module (32), supports the following functions:

- It stores under instructions of the Local Area Network Gateway Unit control module (33), the information coming from the highway bus coupling module (31) and from the local area network coupling module (34).

9.- Improvements in "New simultaneous voice and data communications system, with possibility of connection to public or private networks", according to claims 1 and 4 of the European patent No. 85 112 185.5, and claim 6 of the present patent, characterized in that the Local Area Network Gateway Unit control module (33), supports the following functions:

- It controls the information stored by the highway bus coupling module (31) in the buffer module (32).

- It controls the information stored by the local area network coupling module (34) in the buffer module (32).

- It decides on the information to be transmitted by the local area network coupling module (34) onto the local area network (RAL).

- It decides on the information to be transmitted by the highway bus coupling module (31) onto the ring via the Basic Nucleus (NB) and the corresponding tap point (EC).

- It supports the supervision functions of the Local Area Network Gateway Unit.

10.- Improvements in "New simultaneous voice and data communications system, with possibility of connection to public or private networks", according to claims 1 and 4 of the European patent No. 85 112 185.5, and claim 6 of the present patent, characterized in that the local area network coupling module (34), supports the following functions:

- It receives all the information flowing through the transmission physical support (36) of the local area network (RAL), and retransmits it to the personal computer (35) which forms part of the local area network (RAL) and, at the same time, it stores such information in the buffer module (32).

- It takes, from all the information stored in the buffer module (32), only that information it has been authorised to access by the Unit control module (33), and retransmits it to the personal computer (35) in one side, and in the other side to all data terminals or personal computers (37) once the transmission physical support (36) is seized.

11.- Improvements in "New simultaneous voice and data communications system, with possibility of connection to public or private networks", according to claims 1 and 4 of the European patent No. 85 112 185.5, and claim 6 of the present patent, characterized in that the four specific modules of the Local Area Network Gateway Unit, can be connected to the Basic Nucleus of a User Station.

Fig. 1

Fig.2

Fig.3